# EUROPÄISCHE PATENTSCHRIFT

(11) **EP 0 516 772 B1**
(45) Veröffentlichungstag und Bekanntmachung des Hinweises auf die Patenterteilung: **22.01.1997**
(21) Anmeldenummer: 91920296.0
(22) Anmeldetag: 18.11.1991
(51) Int. Cl.: G11B 20/12, G11B 20/18, G11B 5/09

(54) **VERFAHREN ZUR DIGITALEN VIDEOAUFZEICHNUNG UND -WIEDERGABE NACH DEM SCHRÄGSPURVERFAHREN**
PROCESS FOR DIGITAL VIDEO DISPLAY AND REPRODUCTION BY THE HELICAL-SCANNNING METHOD
PROCEDE POUR L'ENREGISTREMENT ET LA REPRODUCTION VIDEO NUMERIQUE PAR BALAYAGE HELICOIDAL

(30) Priorität: 21.12.1990 DE 4041099
(43) Veröffentlichungstag der Anmeldung: 09.12.1992
(73) Patentinhaber: GRUNDIG E.M.V. Elektro-Mechanische Versuchsanstalt Max Grundig GmbH & Co. KG, D-90762 Fürth (DE)
(72) Erfinder: GEISEN, Norbert, D-8510 Fuerth (DE); OPELT, Christian, D-8501 Veitsbronn (DE)
(86) Internationale Anmeldenummer: EP9102172
(87) Internationale Veröffentlichungsnummer: WO9211635

(56) Entgegenhaltungen:
- EP-A- 0 177 185
- EP-A- 0 267 029
- EP-A- 0 398 618
- SMPTE Journal, Band. 95, Nr. 11, November 1986 J. H. Wilkinson: "The SMPTE Type D-1 Digital Television Tape Recorder - Error Control"

## Beschreibung

Die Erfindung betrifft ein Verfahren und eine Anordnung zur Aufzeichnung und Wiedergabe von digitalen Datenblöcken, insbesondere für die digitale Videoaufzeichnung, auf bzw. von einzelnen Spuren eines Magnetbandes nach dem Schrägspurverfahren.

Bei der Aufzeichnung von Videosignalen gewinnen digitale Aufzeichnungsverfahren immer mehr an Bedeutung. Die digitale Aufzeichnung bringt deutliche Vorteile bei der Bild-, aber auch der Tonqualität. Diese Qualitätsvorteile werden insbesondere beim Überspielvorgang deutlich, da die ursprüngliche Qualität weitestgehend erhalten bleibt. Weiterhin ergeben sich Vorteile bei der Bearbeitung. Trickeffekte, die bei analoger Aufzeichnung möglichst in einem Arbeitsgang ausgeführt werden mußten, um nicht merkliche Qualitätseinbußen hinnehmen zu müssen, können jetzt über mehrere Arbeitsgänge ausgeführt werden.

Einen systembedingten Vorteil erhalten die digitalen Aufzeichnungsverfahren insbesondere durch die Möglichkeit der Fehlerkorrektur, die sowohl Schutz gegen Einzelbitfehler bzw. Einzelsymbolfehler, sogenannte Random-Fehler, als auch gegen Fehlerbündel, d.h. Burstfehler bietet. Diese Fehler können wiedergabeseitig erkannt und meist auch korrigiert werden. Nicht korrigierbare Fehler können abgeschwächt werden, indem aus benachbarten Datenworten die fehlerhaften Datenworte interpoliert werden.

Eine weit verbreitete und sehr effektive Fehlerkorrektur bietet der Produktcode. Mit diesem Code lassen sich sowohl Random-Fehler als auch Burstfehler korrigieren. Im folgenden bezieht sich die Beschreibung der Erfindung auf diesen Produktcode, wobei andere Fehlercodes, beispielsweise kaskadierte Codes, ebenfalls denkbar sind.

Die Fehlerkorrektur mittels Produktcode wird beispielsweise in dem Artikel "The SMPTE Type D-1 Digital Television Tape Recorder-Error control" von S.H. Wilkinson, SMPTE-Journal, November 1986, beschrieben.

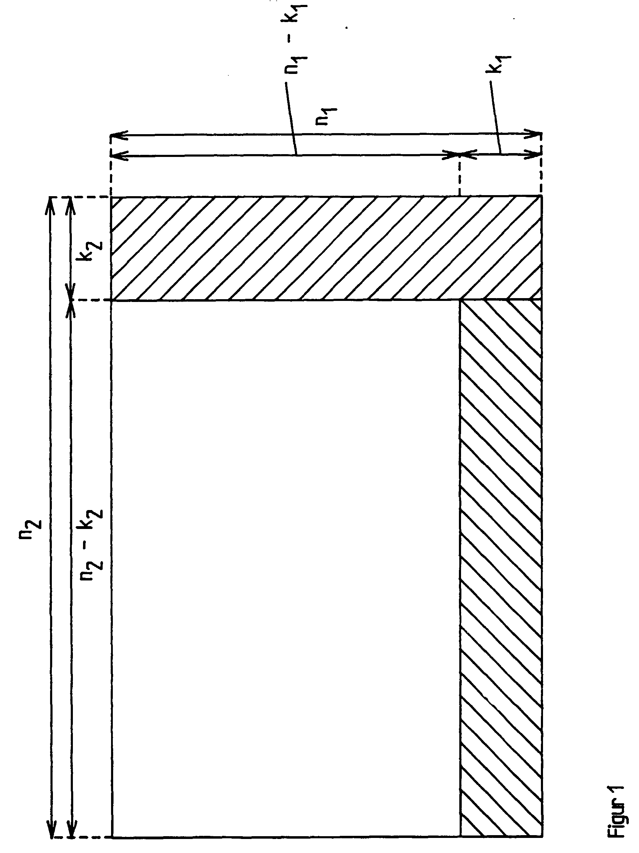

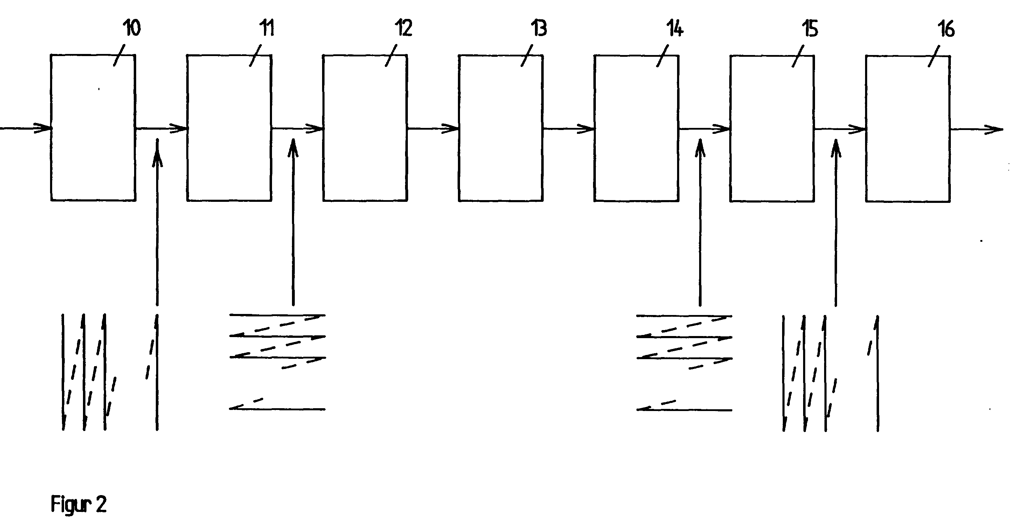

Gemäß Figur 1 werden dort die Daten blockweise angeordnet, wobei ein Block aus n₁ Zeilen mit n₂ Symbolen und n₂ Spalten mit n₁ Symbolen besteht und eine Zeile n₂ - k₂ uncodierte Datensymbole und k₂ Prüfsymbole und eine Spalte n₁ - k₁ uncodierte Datensymbole und k₁ Prüfsymbole enthält. Die Erstellung eines solchen Blockcodes erfolgt mit einer Anordnung nach Figur 2. Am Eingang des Encoders 10 liegen zunächst digitale Videooder Audiodaten an. Jeweils n₁- k₁ uncodierte Datensymbole werden durch k₁ Prüfsymbole, beispielsweise einem Reed-Solomon-Code (R-S-Code), ergänzt und in eine Spalte des Speichers 11 geschrieben. Auf diese Weise werden n₂ - k₂ Spalten in den Speicher 11 geschrieben. Anschließend werden die in ihm enthaltenen Datensymbole zeilenweise ausgelesen und einem Encoder 12 zugeführt. In diesem Encoder 12 wird jeder ausgelesenen Zeile ein weiterer R-S-Prüfcode, der aus k₂ Prüfsymbolen besteht, zugefügt, so daß ein Blockcode entsprechend Figur 1 entsteht. Die auf diese Weise codierten digitalen Signale werden auf ein Magnetband 13 aufgezeichnet. Bei der Wiedergabe werden diese Signale mit Hilfe der Decoder 14 und 16 und des Speichers 15 in zur Aufzeichnung umgekehrter Reihenfolge wieder decodiert, so daß am Ausgang des Decoders 16 die Daten vorliegen, welche vor dem Codiervorgang auf der Aufzeichnungsseite am Encoder 10 angelegen haben.

Entsprechend der Struktur der Datenblöcke werden die digitalen Daten nach dem Schrägspuraufzeichnungsverfahren auf eine Spur aufgezeichnet, wobei die Aufzeichnung in der Reihenfolge erfolgt, wie sie vom Encoder 12 erhalten wird.

Bei der Beschreibung von Figur 1 und Figur 2 wird die Codierung eines Blocks näher erläutert. Bei der Aufzeichnung werden aber jeweils auf eine Spur des Magnetbandes mehrere Blöcke aufgezeichnet. Dies sind ein bzw. mehrere Videoblöcke, sowie mehrere Audioblöcke, wobei die Audioblöcke weniger Daten enthalten als die Videoblöcke.

Es gibt mehrere Möglichkeiten der Aufzeichnungsreihenfolge der einzelnen Blockcodes auf einer Spur. So ist es bekannt, die Audioblöcke am Anfang oder am Ende einer Spur aufzuzeichnen. Weiterhin ist es bekannt, die Videodaten, die auf eine Spur aufgezeichnet werden sollen, in zwei Datenblöcke, d.h. in zwei Blockcodes aufzutrennen. Bei der Aufzeichnung wird dann der Audioblock in die Mitte der Spur geschrieben und ein Videoblock liegt vor, der andere nach dem Audioblock auf einer Spur.

Ein wichtiger Gesichtspunkt bei der Anordnung der Datenblöcke auf einer Spur eines digitalen Schrägspuraufzeichnungsgerätes ist die Bildwiedergabequalität bei Sonderfunktionen, insbesondere bei der Wiedergabe mit veränderter Bandgeschwindigkeit, also Zeitlupen- oder Suchlaufbetrieb.

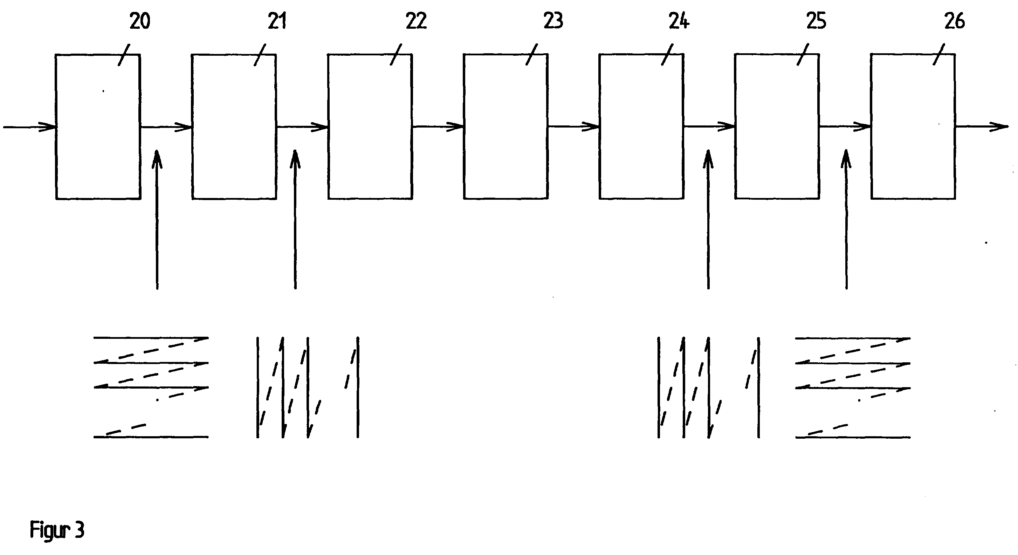

Die Erfindung geht von einer Anordnung gemäß Figur 3 aus, welche in Bezug auf das Funktionsprinzip der Anordnung nach Figur 2 entspricht. Die Eingangsdaten durchlaufen einen zeilenorientierten Encoder 20, welcher einer entsprechenden Anzahl von Daten zeilenorientierte Prüfsymbole (P-Prüfcode) hinzufügt. Diese Daten werden zeilenweise in einen Speicher 21 geschrieben, wobei eine Zeile jeweils die Nutzinformation und die zeilenorientierten Prüfsymbole beinhaltet. Wenn der Speicher 21 eine bestimmte Anzahl von Zeilen enthält, werden die Daten spaltenweise aus diesem Speicher ausgelesen und einem spaltenorientierten Encoder 22 zugeführt, der jeder Spalte spaltenorientierte Prüfsymbole (Q-Prüfcode) hinzufügt. Dann werden die Daten auf das Magnetband 23 geschrieben. Bei der Wiedergabe werden die Daten vom Band gelesen und in einem spaltenorientierten Decoder 24 wird der Q-Prüfcode ausgewertet. Nicht korrigierte Daten werden gekennzeichnet. Die den spaltenorientierten Decoder verlassenden Daten werden spaltenweise in den Speicher 25 geschrieben, von dem sie zeilenweise wieder ausgelesen und dem zeilenorientierten Decoder 26 zugeführt werden, der den P-Prüfcode auswertet. Am Ausgang liegen die Daten, die durch die Codierung in veränderter Reihenfolge aufgezeichnet wurden, wieder in ihrer ursprünglichen Reihenfolge vor.

Auf der Wiedergabeseite durchlaufen also die Daten zunächst den spaltenorientierten Decoder, der Randomfehler und gegebenenfalls kurze Burstfehler korrigieren kann, der aber keine längeren Burstfehler, wie sie insbesondere bei Sonderfunktionen auftreten, korrigieren kann. Der zweite Decoder, in diesem Fall also der zeilenorientierte Decoder arbeitet bei Sonderfunktionen nicht, so daß man bei der Aufzeichnung der Daten in veränderter Reihenfolge keine fehlerfreien zeilenorientierten Blöcke erhalten kann.

Es ist deshalb Aufgabe der Erfindung ein Verfahren und eine Anordnung zur Durchführung dieses Verfahrens anzugeben, das möglich viele fehlerfreie zeilenorientierte Blöcke bei Sonderfunktionen zuläßt, ohne die Wiedergabequalität bei normaler Wiedergabefunktion zu beeinträchtigen.

Die Aufgabe wird bei dem erfindungsgemäßen Verfahren gemäß Anspruch 1 gelöst. Die Daten werden in nicht veränderter Reihenfolge aufgezeichnet, was zu Vorteilen bei Datenreduktionsverfahren z.B. mit Hilfe einer Transformationscodierung führt, da keine Aufspaltung von nicht korrigierbaren Burstfehlern in Randomfehler erfolgt. Dazu wird bei der Anordnung zur Durchführung des Verfahrens auf der Aufzeichnungsseite ein zweiter Speicher im Anschluß an den spaltenorientierten Encoder eingefügt, in den die Daten spaltenweise eingelesen und zeilenweise ausgelesen werden.

Auf der Wiedergabeseite werden demnach die Daten zunächst dem zeilenorientierten Decoder zugeführt und nach der Umsortierung in einem Speicher anschließend dem spaltenorientierten Decoder. Danach werden die Daten mit einem zweiten wiedergabeseitigen Speicher wieder in die ursprüngliche Reihenfolge umsortiert.

Bei der Wiedergabe mit veränderter Geschwindigkeit arbeitet wieder der zweite Decoder, in diesem Fall der spaltenorientierte Decoder nicht, jedoch steht ein großer Teil der zeilenorientierten Blöcke, in denen die Daten in der richtigen Reihenfolge korrigiert vorliegen, zur Verfügung.

Gemäß der Erfindung werden die bei Sonderfunktionen nicht auswertbaren spaltenorientierten Prüfsymbole am Anfang oder am Ende bzw. an beiden Enden einer Spur aufgezeichnet. Die bei Videosonderfunktionen ebenfalls nicht benötigten Audiodaten können am gegenüberliegenden Ende bzw. Anfang einer Spur aufgezeichnet werden. Dieses Verfahren ist besonders vorteilhaft, da die bei Sonderfunktionen nicht benötigten bzw. nicht auswertbaren Daten am Bandeinlauf bzw. am Bandauslauf des Magnetkopfes liegen, wo sie durch fehlerhafte Spurhaltung und mangelhaften Band/Kopf-Kontakt bei den Sonderfunktionen häufig nicht fehlerfrei gelesen werden können.

Das erfindungsgemäße Verfahren und die erfindungsgemäße Anordnung zur Durchführung dieses Verfahrens werden im folgenden an Hand der Figuren 4 bis 6 näher erläutert. Es zeigen:
- Figur 4: die Anordnung des Codes in einer Spur
- Figur 5: die Lage der Daten auf einer Aufzeichnungsspur
- Figur 6: das Blockschaltbild einer erfindungsgemäßen Anordnung

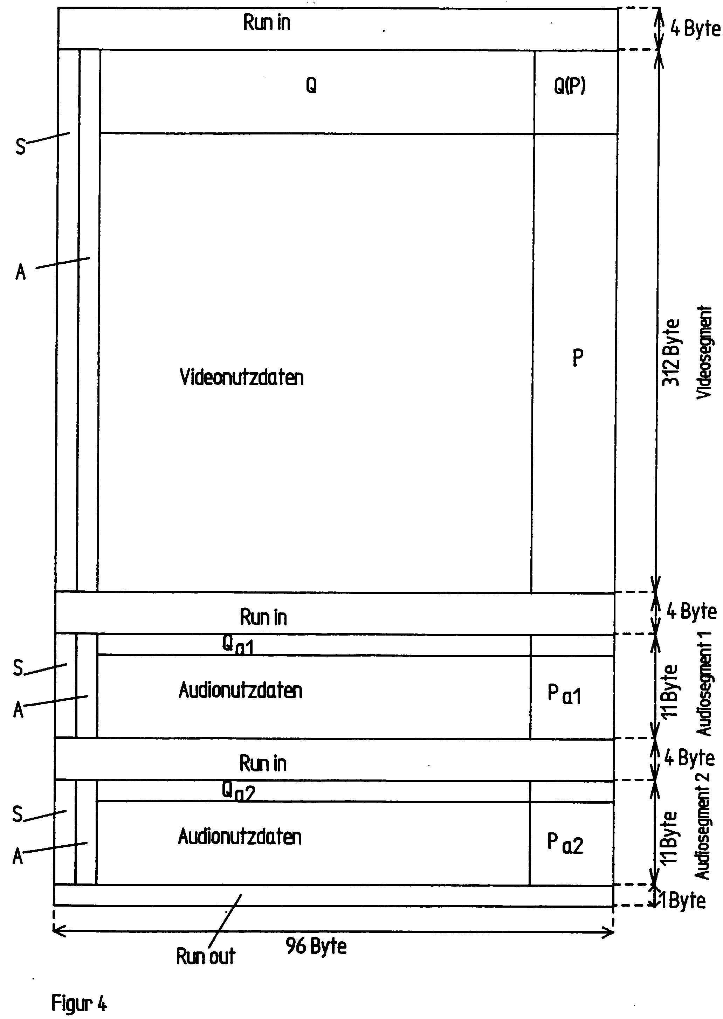

In Figur 4 ist eine Blockanordnung der Daten dargestellt, wie sie in einer Spur zu liegen kommen, wobei nach dieser Figur der spaltenorientierte Prüfcode am Bandeinlauf und die Audiodaten am Bandauslauf des Magnetkopfes zu liegen kommen. Die umgekehrte Anordnung ist gemäß der Erfindung ebenso denkbar. Die Datentiefe der einzelnen Segmente und Teilsegmente in Byte ist ohne Beschränkung der allgemeinen Geltung beispielhaft angegeben. Der Codeblock, wie er auf einer Spur zu liegen kommt, besteht nach Figur 4 aus 3 Segmenten. Ein Videosegment, das 312 Byte in spaltenorientierter und 96 Byte in zeilenorientierter Richtung umfaßt, zwei Audiosegmente, die jeweils 11 Byte in spaltenorientierter Richtung und 96 Byte in zeilenorientierter Richtung beinhalten. Weiterhin sind zur Abgrenzung der einzelnen Segmente sogenannte Run in- bzw. Run out-Bereiche angegeben, welche in zeilenorientierter Richtung jeweils 96 Byte lang sind. In spaltenorientierter Richtung beträgt die Länge der Run in-Bereiche 4 Byte, der Run out-Bereich beträgt 1 Byte in spaltenorientierter Richtung. Die Run in-Bereiche befinden sich vor dem Videosegment, nach dem Videosegment, d.h. vor dem ersten Audiosegment und zwischen den Audiosegmenten. Nach dem zweiten Audiosegment befindet sich der Run out-Bereich.

Gemäß der Erfindung liegen die spaltenorientierten Prüfsymbole Q nicht im Anschluß an die Videonutzdaten in Spalten-Richtung, sondern sie werden noch vor die Videonutzdaten gelegt, so daß sie in der Spur am Bandeinlauf des Magnetkopfes zu liegen kommen. Die zeilenorientierten Prüfsymbole P liegen in Figur 4 wie beim Stand der Technik im Anschluß an die Videonutzdaten in zeilenorientierter Richtung.

In zeilenorientierter Richtung vor den spaltenorientierten Prüfsymbolen Q bzw. den Videonutzdaten liegen jeweils 2 Byte Synchronisationsdaten S und 2 Byte Adressdaten A.

Der Aufbau der Audiosegmente ist dem Aufbau des Videosegmentes gleich, wobei die Datenmenge, die in den Audiosegmenten enthalten ist, wesentlich geringer ist, als die im Videosegment enthaltene Datenmenge. Die Datenmenge der beiden Audiosegmente entspricht etwa der Datenmenge des spaltenorientierten Prüfcodes Q.

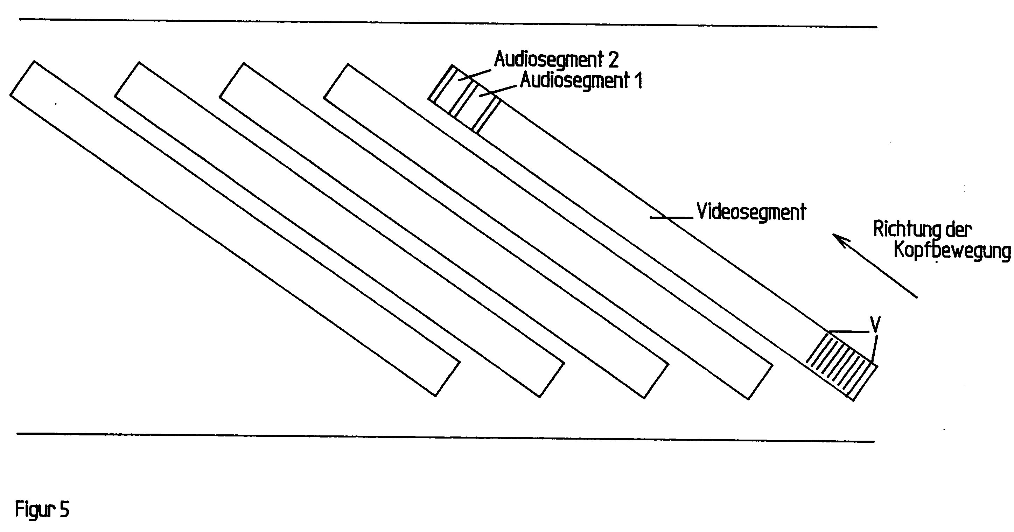

In Figur 5 ist die Lage der Daten auf einer Spur des Magnetbandes dargestellt. Entsprechend der Richtung der Videokopfbewegung liegen die Prüfsymbole des spaltenorientierten Prüfcodes am Bandeinlauf des Magnetkopfes direkt nach dem ersten Run in-Bereich. Anschließend folgen die übrigen Daten des Videosegments und am Bandauslauf liegen die beiden Audiosegmente.

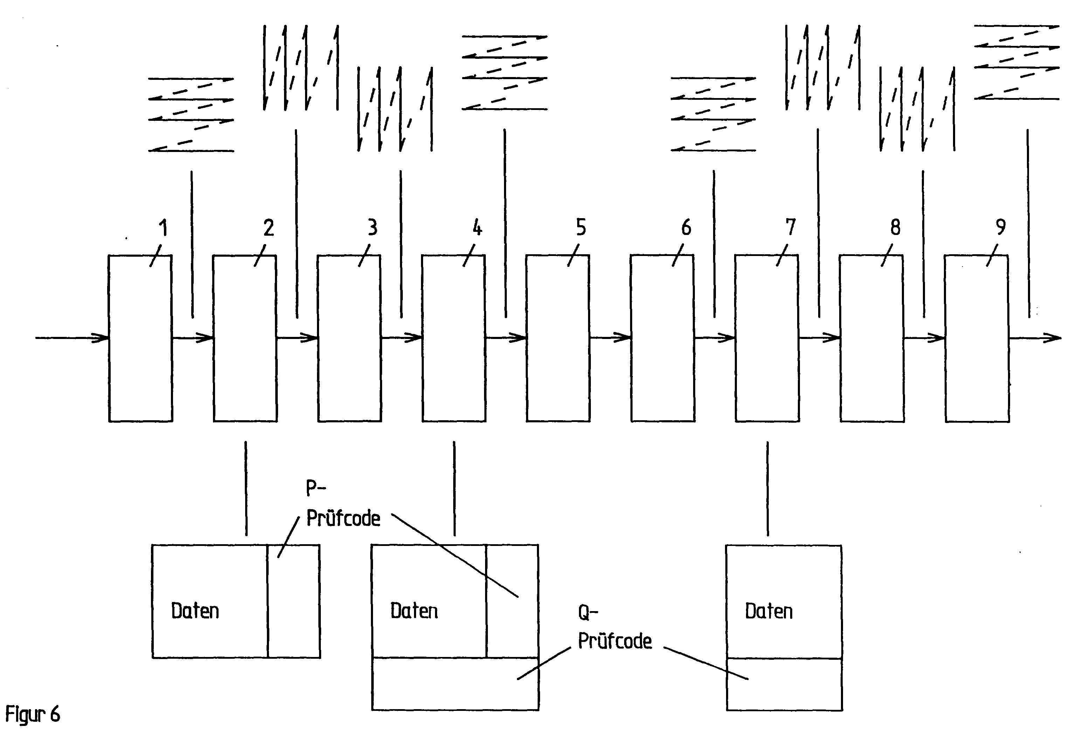

In Figur 6 ist eine erfindungsgemäße Anordnung zur Durchführung des oben beschriebenen Aufzeichnungsverfahrens dargestellt.

Diese Anordnung besteht aus einem zeilenorientierten Encoder 1, an dem die Eingangsdaten anliegen. Der zeilenorientierte Encoder ist verbunden mit einem Speicher 2, der weiter mit dem spaltenorientierten Encoder 3 verbunden ist. Vom spaltenorientierten Eiicoder 3 führt eine Datenverbindung zum Speicher 4. Die Daten aus diesem Speicher werden auf das Magnetband 5 aufgezeichnet. Auf der Wiedergabeseite werden die vom Magnetband 5 gelesenen Daten dem zeilenorientierten Decoder 6 zugeführt, der weiter mit dem Speicher 7 verbunden ist. Die Daten aus dem Speicher 7 werden dem spaltenorientierten Decoder 8 zugeführt und im Anschluß an die Decodierung in den Speicher 9 geschrieben, von dem sie als Ausgangsdaten der weiteren Signalverarbeitung zugeführt werden.

Zum besseren Verständnis sind die Speicherinhalte noch zusätzlich schematisch dargestellt. Die Nutzdaten liegen am Eingang des zeilenorientierten Encoders 1 an. Diese Eingangsdaten durchlaufen den zeilenorientierten Decoder und werden dann zeilenweise in den Speicher 2 eingeschrieben. Am Ende jeder Zeile fügt der zeilenorientierte Encoder 1 Prüfsymbole hinzu, so daß ein Block mit zeilenorientierten Codewörtern entsteht, der sich aus Nutzdaten und zeilenorientierten Prüfsymbolen zusammensetzt. Wenn genügend zeilenorientierte Codewörter entstanden sind, um den gewünschten Produktcodeblock zu bilden, werden die Daten spaltenweise aus dem Speicher 2 ausgelesen und dem spaltenorientierten Encoder 3 zugeführt. Die Reihenfolge der dem spaltenorientierten Encoder 3 zugeführten Daten ist also verändert und zusätzlich um die zeilenorientierten Prüfsymbole erweitert. Im spaltenorientierten Encoder werden am Ende jeder Spalte spaltenorientierte Prüfsymbole zugefügt und spaltenweise in den Speicher 4 eingeschrieben, so daß im zweiten Speicher ein Produktcodeblock abgelegt ist, der sich aus den Nutzdaten in ihrer ursprünglichen Reihenfolge, ergänzt durch die zeilen- und spaltenorientierten Prüfsymbole, zusammensetzt. Damit die spaltenorientierten Prüfsymbole am Bandeinlauf des Magnetkopfes zu liegen kommen, werden aus dem Speicher 4 zunächst diese spaltenorientierten Prüfsymbole zeilenweise von oben nach unten ausgelesen und auf das Magnetband aufgezeichnet und danach werden die übrigen Daten zeilenweise von oben nach unten ausgelesen und aufgezeichnet.

Auf der Wiedergabeseite duchlaufen die vom Band gelesenen Daten zunächst den zeilenorientierten Decoder 6, der durch Auswertung der P-Prüfsymbole Randomfehler und kurze Burstfehler korrigieren kann und nicht korrigierte Fehler kennzeichnet. Die Daten werden danach zeilenweise und ohne den zeilenorientierten Prüfcode in den Speicher 7 geschrieben, wobei die zuerst erhaltenen Q-Prüfsymbole des spaltenorientierten Prüfcodes in den unteren Speicherbereich und die Nutzdaten in den oberen Speicherbereich, jeweils von oben nach unten, geschrieben werden. Aus dem Speicher 7 werden die Daten spaltenweise ausgelesen und dem spaltenorientierten Decoder 8 zugeführt, der die noch bestehenden Fehler an Hand der spaltenorientierten Prüfsymbole und Fehlerkennzeichnung korrigiert. Die so erhaltenen Daten werden wieder spaltenweise in den Speicher 9 eingeschrieben, in dem sie dann in ihrer ursprünglichen Reihenfolge und ohne Prüfsymbole vorliegen.

Bei einer Wiedergabe mit veränderter Geschwindigkeit, beispielsweise Suchlauf oder Zeitlupe, arbeitet nur der zeilenorientierte Decoder 6 korrekt. Mit ihm können Randomfehler und bei entsprechender Dimensionierung kurze Burstfehler korrigiert werden. Nicht korrigierte Datenblöcke werden gekennzeichnet. Der spaltenorientierte Decoder arbeitet nicht, aber es steht ein großer Teil der Zeilen-Blöcke fehlerfrei zur Verfügung. Nicht korrigierbare längere Burstfehler sind vor allem am Bandeinlauf und am Bandauslauf des Magnetkopfes zu erwarten. An diesen Stellen einer Aufzeichnungsspur stehen aber bei dem erfindungsgemäßen Verfahren die spaltenorientierten Prüfsymbole, die ohnehin nicht ausgewertet werden können und die Audiodaten, die bei einer Wiedergabe mit veränderter Geschwindigkeit ebenfalls nicht ausgewertet werden.

Bei der erfindungsgemäßen Anordnung werden die Nutzdaten in der gleichen zeitlichen Reihenfolge auf das Band aufgezeichnet, wie sie am Eingang anliegen, d.h. Burstfehler werden wiedergabeseitig nicht in Einzelfehler aufgebrochen, da z.B. bei einer Tranformationscodierung ein Einzelfehler die gleichen Auswirkungen hat, wie ein Burstfehler.

Soll bei anderen Codieralagorithmen die Reihenfolge der auf das Band aufgezeichneten Daten dennoch gegenüber der am Eingang anliegenden Reihenfolge verändert werden, so ist dies in einfacher Weise durch Vorschalten eines zusätzlichen Speichers auf der Aufzeichnungs- und Nachschalten eines Speichers auf der Wiedergabeseite möglich.

## Patentansprüche

1. Verfahren zur Aufzeichnung und Wiedergabe von digitalen Datenblöcken auf bzw. von einzelnen Spuren eines Magnetbandes nach dem Schrägspuraufzeichnungsverfahren, wobei ein Datenblock aus mehreren Segmenten besteht, von denen jedes Segment entweder Video- oder Audiodaten beinhaltet und die Daten jedes Segmentes einen verketteten Blockcode darstellen, wobei jeweils die Zeilen der matrixförmig dargestellten Nutzdaten durch eine oder mehrere Prüfsymbole (P, Pₐ₁, Pₐ₂) und ebenso die Spalten durch Prüfsymbole (Q, Q(P), Qₐ₁, Qₐ₂) ergänzt werden,
**dadurch gekennzeichnet**, daß
die Nutzdaten, welche die Videosignale und die Audiosignale darstellen einer datenreduzierten Codierung unterzogen werden und in der gleichen zeitlichen Reihenfolge aufgezeichnet werden, in der sie am Eingang (1) einer Anordnung (1-4), die die Daten mit den Prüfsymbolen versieht, anliegen, und
bei der Aufzeichnung die Daten der entlang der Spalten des Blockcodes hinzugefügten spaltenorientierten Prüfsymbole (Q, Q(P)) jeweils an einem oder beiden Enden einer Aufzeichnungsspur zu liegen kommen.

2. Verfahren nach Anspruch 1,
**dadurch gekennzeichnet**, daß
die Audiodaten am Ende und die Daten der Prüfsymbole, mit dem die Spalten der matrixförmig angeordneten Daten ergänzt werden, am Anfang einer Aufzeichnungsspur zu liegen kommen.

3. Verfahren nach Anspruch 1,
**dadurch gekennzeichnet**, daß
die Daten der Prüfsymbole, mit dem die Spalten der matrixförmig angeordneten Daten ergänzt werden, am Ende einer Aufzeichnungsspur und die Audiodaten am Anfang einer Aufzeichnungsspur zu liegen kommen.

4. Verfahren zur Aufzeichnung digitaler Daten nach einem oder mehreren der Ansprüche 1 bis 3,
**dadurch gekennzeichnet**, daß
die Eingangsdaten in einem ersten Encoder (1) mit die Zeilen ergänzenden Prüfsymbolen versehen werden und zeilenweise mit dem Prüfcode in einem ersten Speicher (2) abgelegt werden, daß nach einer vorgegebenen Anzahl von im Speicher abgelegten Zeilen die Daten spaltenweise ausgelesen werden und in einem zweiten Encoder (3) mit die Spalten ergänzenden Prüfsymbolen versehen werden, daß diese Daten spaltenweise in einen zweiten Speicher (4) geschrieben werden, daß zur Aufzeichnung auf das Magnetband (5) die Daten zeilenweise aus dem zweiten Speicher ausgelesen werden, wobei zunächst die letzten Zeilen des Blockcodes, welche nur die den Spalten hinzugefügten Prüfsymbole beinhalten, zeilenweise von oben nach unten ausgelesen und aufgezeichnet werden und danach die ersten Zeilen von oben nach unten zeilenweise ausgelesen und aufgezeichnet werden.

5. Verfahren zur Wiedergabe der nach dem Verfahren nach Anspruch 4 aufgezeichneten Daten,
**dadurch gekennzeichnet**, daß
die vom Band gelesenen Daten zunächst einen ersten Decoder (6) durchlaufen, welcher eine Fehlererkennung bzw. -korrektur mittels der den Zeilen hinzugefügten äußeren Prüfsymbole (P) durchführt, daß die fehlerkorrigierten Daten ohne den den Zeilen hinzugefügten Fehlercode zeilenweise in einen dritten Speicher (7) eingeschrieben werden, daß diese Daten spaltenweise ausgelesen und einem zweiten Decoder (8) zugeführt werden, in dem mittels der den Spalten zugefügten Prüfsymbole (Q) eine Fehlererkennung bzw. - korrektur durchgeführt wird, und daß die Daten, welche den zweiten Decoder durchlaufen haben, ohne Prüfsymbole spaltenweise in einen vierten Speicher (9) eingeschrieben werden.

6. Anordnung zur Durchführung des Verfahrens nach einem oder mehreren der Ansprüche 1 bis 5,
**dadurch gekennzeichnet**, daß
diese Anordnung
- einen Encoder (1) enthält, welcher den digitalen Eingangsdaten die Zeilen ergänzenden äußeren Prüfsymbole zufügt,
- einen Speicher (2) enthält, in den die Daten mit den die Zeilen ergänzenden Prüfsymbolen zeilenweise eingeschrieben und spaltenweise ausgelesen werden
- einen Encoder (3) enthält, der den aus dem Speicher (2) ausgelesenen Daten die Spalten ergänzenden Prüfsymbole hinzufügt
- einen Speicher (4) enthält, in den die aus dem Encoder (3) erhaltenen Daten spaltenweise eingeschrieben werden und zeilenweise ausgelesen werden, wobei zunächst die die Spalten ergänzenden Prüfsymbolen zeilenweise von oben nach unten und dann die übrigen Daten zeilenweise von oben nach unten ausgelesen werden,
- eine Aufzeichnungsvorrichtung (5) enthält, auf der die vom Speicher (4) ausgelesenen Daten aufgezeichnet werden,
- einen Decoder (6) enthält, der bei der Wiedergabe eine Fehlererkennung bzw. -korrektur mittels der den Zeilen zugefügten Prüfsymbole durchführt,
- einen Speicher (7) enthält, in den bei der Wiedergabe die aus dem Decoder (6) erhaltenen Daten zeilenweise eingeschrieben werden und spaltenweise ausgelesen werden,
- einen Decoder (8) enthält, der bei der Wiedergabe eine Fehlererkennung bzw. -korrektur einer mittels der den Spalten zugefügten Prüfsymbole und Fehlerkennzeichnung des vorhergehenden Decoders durchführt und der bei Sonderbetriebsarten wirkungslos bleibt,
- einen Speicher (9) enthält, in den bei der Wiedergabe die aus dem Decoder (8) erhaltenen Daten spaltenweise eingeschrieben werden und zeilenweise ausgelesen werden.

## Claims

1. Method for the recording and playback of digital data blocks on, or from, individual tracks of a magnetic tape by the helical recording method, in which a data block is composed of a plurality of segments of which each segment contains either video data or audio data and the data of each segment represent a concatenated block code, the rows of the useful data represented in matrix form being supplemented in each case by one or more test symbols (P, Pₐ₁, Pₐ₂) and the columns also being supplemented by test symbols (Q, Q(P), Qₐ₁, Qₐ₂), characterized in that the useful data, which represent the video signals and the audio signals, are subjected to a data-reduced coding and are recorded in the same time sequence in which they are present at the input (1) of an arrangement (1-4) which provides the data with the test symbols and, during the recording, the data of the column-oriented test symbols (Q, Q(P)) added along the columns of the block codes end up in each case at one or both ends of a recording track.

2. Method according to Claim 1, characterized in that the audio data at the end and the data of the test symbols with which the columns of the data arranged in matrix form are supplemented end up at the beginning of a recording track.

3. Method according to Claim 1, characterized in that the data of the test symbols with which the columns of the data arranged in matrix form are supplemented end up at the end of a recording track and the audio data end up at the beginning of a recording track.

4. Method for the recording of digital data according to one or more of Claims 1 to 3, characterized in that the input data are provided in a first encoder (1) with test symbols supplementing the rows and are recorded row by row with the test code in a first memory (2), in that, after a specified number of rows stored in the memory, the data are read out column by column and are provided in a second encoder (3) with test symbols supplementing the columns, in that said data are written column by column into a second memory (4), and in that, for the purpose of recording on the magnetic tape (5), the data are read out of the memory row by row, the last rows of the block code, which contain only the test symbols added to the columns, first being read out row by row from top to bottom and recorded and then the first rows being read out from top to bottom row by row and recorded.

5. Method for the playback of the data recorded by the method according to Claim 4, characterized in that the data read from the tape first pass through a first decoder (6) which carries out an error detection or error correction by means of the outer test symbols (P) added to the lines, in that the error-corrected data are read into a third memory (7) row by row without the error code added to the rows, in that said data are read out column by column and fed to a second decoder (8) in which an error detection or error correction is carried out by means of the test symbols (Q) added to the columns, and in that the data which have passed through the second decoder are written into a fourth memory (9) column by column without test symbols.

6. Arrangement for carrying out the method according to one or more of Claims 1 to 5, characterized in that said arrangement
- contains an encoder (1) which adds the row-supplementing outer test symbols to the digital input data,
- contains a memory (2) into which the data are read row by row with the line-supplementing test symbols and are read out column by column,
- contains an encoder (3) which adds the column-supplementing test symbols to the data read out of the memory (2),
- contains a memory (4) into which the data obtained from the encoder (3) are written column by column and read out row by row, the test symbols supplementing the columns first being read out row by row from top to bottom and the remaining data then being read out row by row from top to bottom,
- contains a recording device (5) on which the data read out of the memory (4) are recorded,
- contains a decoder (6) which carries out during the recording an error detection or error correction by means of the test symbols added to the rows,
- contains a memory (7) into which, during the playback, the data obtained from the decoder (6) are written row by row and are read out column by column,
- contains a decoder (8) which, during the playback, carries out an error detection or error correction by means of the test symbols added to the columns and error flagging of the preceding decoder and which remains inactive in special operating modes,
- contains a memory (9) into which, during playback, the data obtained from the decoder (8) are written column by column and are read out row by row.

## Revendications

1. Procédé pour l'enregistrement et la reproduction de blocs de données numériques sur ou à partir de pistes individuelles d'une bande magnétique selon le procédé d'enregistrement sur des pistes obliques, un bloc de données étant constitué de plusieurs segments, dont chacun contient soit des données vidéo, soit des données audio, et les données de chaque segment représentant un code de bloc chaîné, les lignes respectives des données utiles représentées sous la forme matricielle étant complétées par un ou plusieurs symboles de contrôle (P, Pₐ₁, Pₐ₂) et également les colonnes étant complétées par des symboles de contrôle (Q, Q(P), Qₐ₁, Qₐ₂),
caractérisé en ce que les données utiles, qui représentent les signaux vidéo et les signaux audio, sont soumises à un codage réduisant les données et sont enregistrées selon la même succession temporelle que celle avec laquelle elles sont présentes à l'entrée (1) d'un dispositif (1-4), qui annexe aux données les symboles de contrôle, et
lors de l'enregistrement, les données des symboles de contrôle (Q, Q(P)), qui sont ajoutées le long des colonnes du code de bloc et sont orientées suivant des colonnes, viennent s'appliquer respectivement sur une extrémité ou sur les deux extrémités d'une piste d'enregistrement.

2. Procédé selon la revendication 1, caractérisé en ce que les données audio viennent se placer à la fin d'une piste d'enregistrement et les données des symboles de contrôle, avec lesquelles les colonnes des données disposées sous forme matricielle sont complétées, viennent s'appliquer au début d'une piste d'enregistrement.

3. Procédé selon la revendication 1, caractérisé en ce que les données des symboles de contrôle, avec lesquelles les colonnes des données disposées sous forme matricielle sont complétées, viennent s'appliquer à la fin d'une piste d'enregistrement et les données audio viennent s'appliquer au début d'une piste d'enregistrement.

4. Procédé pour l'enregistrement de données numériques selon une ou plusieurs des revendications 1 à 3, caractérisé en ce que les données d'entrée sont pourvues de symboles de contrôle, qui complètent les lignes, dans un premier codeur (1) et sont mémorisées ligne par ligne, avec le code de contrôle, dans une première mémoire (2), au bout d'un nombre prédéterminé de lignes mémorisées dans la mémoire, les données sont lues colonne par colonne et sont pourvues de symboles de contrôle complétant les colonnes, dans un second codeur (3), que ces données sont enregistrées colonne par colonne dans une seconde mémoire (4), que pour l'enregistrement sur la bande magnétique (5), les données sont lues ligne par ligne dans la seconde mémoire, auquel cas tout d'abord les dernières lignes du code de bloc, qui contiennent uniquement les symboles de contrôle ajoutés aux colonnes, sont lues ligne par ligne de haut en bas et sont enregistrées, et ensuite les premières lignes sont lues ligne par ligne de haut en bas et sont enregistrées.

5. Procédé pour la reproduction des données enregistrées selon le procédé selon la revendication 4, caractérisé en ce que les données lues sur la bande traversent tout d'abord un premier décodeur (6), qui exécute une identification et une correction d'erreurs à l'aide des symboles extérieurs de contrôle (P) ajoutés aux lignes, que les données, dont les erreurs sont corrigées, sont enregistrées ligne par ligne dans une troisième mémoire (7), sans le code d'erreur adjoint aux lignes, que ces données sont lues colonne par colonne et sont envoyées à un second décodeur (8), dans lequel une correction d'erreur est exécutée au moyen des symboles de contrôle (Q) ajoutés aux colonnes, et que les données, qui ont traversé le second décodeur, sont enregistrées colonne par colonne sans symbole de contrôle dans une quatrième mémoire (9).

6. Dispositif pour la mise en oeuvre du procédé selon une ou plusieurs des revendications 1 à 5,
caractérisé en ce que ce dispositif contient
- un décodeur (1), qui ajoute des symboles extérieurs de contrôle complétant les lignes, aux données numériques d'entrée,
- une mémoire (2), dans laquelle les données complétées des symboles de contrôle dans les lignes sont enregistrées ligne par ligne et sont lues colonne par colonne,
- un codeur (3), qui ajoute des symboles de contrôle complétant les colonnes aux données lues dans la mémoire (2),
- une mémoire (4), dans laquelle les données reçues de la part du codeur (3) sont enregistrées colonne par colonne et lues ligne par ligne, auquel cas tout d'abord les symboles de contrôle complétant les colonnes sont lues ligne par ligne de haut en bas, puis les autres données sont lues ligne par ligne de haut en bas,
- un dispositif d'enregistrement (5), sur lequel sont enregistrées les données lues à partir de la mémoire (4),
- un décodeur (6) qui, lors de la reproduction, exécute une identification ou une correction d'erreurs au moyen des symboles de contrôle ajoutés aux lignes,
- une mémoire (7) dans laquelle, lors de la reproduction, les données reçues de la part du décodeur (6) sont enregistrées ligne par ligne et lues colonne par colonne,
- un décodeur (8) qui, lors de la reproduction, exécute une identification et une correction d'erreur au moyen des symboles de contrôle ajoutés aux colonnes et une caractérisation d'erreur du décodeur précédent et qui reste sans effet dans le cas de types de fonctionnement particuliers,
- une mémoire (9), dans laquelle, lors de la reproduction, les données reçues du décodeur (8) sont enregistrées colonne par colonne et lues ligne par ligne.
